# EUROPÄISCHE PATENTSCHRIFT

(11) **EP 2 359 450 B1**
(45) Veröffentlichungstag und Bekanntmachung des Hinweises auf die Patenterteilung: **01.04.2015**
(21) Anmeldenummer: 08875098.9
(22) Anmeldetag: 10.12.2008
(51) Int. Cl.: H02H 7/26

(54) **VERFAHREN UND SCHUTZGERÄT ZUM ÜBERWACHEN EINER SAMMELSCHIENE EINES ELEKTRISCHEN ENERGIEVERSORGUNGSNETZES**
METHOD AND SAFETY DEVICE FOR MONITORING A BUS BAR OF AN ELECTRICAL ENERGY SUPPLY GRID
PROCÉDÉ ET APPAREIL DE PROTECTION POUR SURVEILLER UNE BARRE OMNIBUS D'UN RÉSEAU DE DISTRIBUTION D'ÉNERGIE ÉLECTRIQUE

(43) Veröffentlichungstag der Anmeldung: 24.08.2011
(73) Patentinhaber: Siemens Aktiengesellschaft, 80333 München (DE)
(72) Erfinder: HARTMANN, Oliver, 27606 Raiegh (DE)
(86) Internationale Anmeldenummer: PCT/EP2008/010819
(87) Internationale Veröffentlichungsnummer: WO 2010/066279

(56) Entgegenhaltungen:
- "Effiziente Energie-Automatisierung mit dem Standard IEC 61850 Anwendungsbeispiele" [Online] 2007, SIEMENS , GERMANY , XP002534393 Gefunden im Internet: URL:http://siemens.siprotec.com/newsletter /iec61850/pdf/E50001-K4455-A101-A1_Katalog _Anwendungsbeispiele.pdf> Seite 7, linke Spalte, Absatz 1 - Seite 8, rechte Spalte, Absatz 1; Abbildungen 1,2 Seite 9, linke Spalte, Absatz 1 - Seite 10, rechte Spalte, Absatz 3 Seite 12, linke Spalte, Absätze 1,2
- SERGIO KIMURA ET AL: "Applying IEC 61850 to Real Life: Modernization Project for 30 Electrical Substations" [Online] 3. April 2008 (2008-04-03), SCHWEITZER ENGINEERING LABORATORIES, INC. , XP002534710 Gefunden im Internet: URL:http://www.energycentral.com/download/ products/6308_Applying61850_RA_20080403.pd f> Seite 11, linke Spalte, Absatz 8 - Seite 13, rechte Spalte, Absatz 1; Abbildungen 16-21
- "SIPROTEC 7SJ600 Numerical Overcurrent, Motor and Overload Relay" [Online] 1997, SIEMENS , GERMANY , XP002535216 Gefunden im Internet: URL:http://www.wontex-power.com/download/7 sj600_catalogue.pdf> in der Anmeldung erwähnt Seite 11, Absätze 1,2; Abbildung 30

## Beschreibung

Die Erfindung betrifft ein Verfahren zum Überwachen einer Sammelschiene eines elektrischen Energieversorgungsnetzes hinsichtlich auftretender Kurzschlüsse, wobei die Sammelschiene eine Einspeisung und zumindest zwei Abzweige aufweist, an jedem Abzweig ein Abzweigschutzgerät vorgesehen ist, das den jeweiligen Abzweig auf Kurzschlüsse überwacht, und an der Einspeisung ein Einspeisungsschutzgerät vorgesehen ist, das die Sammelschiene auf Kurzschlüsse überwacht. Bei einem Kurzschluss in einem der Abzweige sendet das diesem Abzweig zugeordnete Abzweigschutzgerät an das Einspeisungsschutzgerät ein Blockiersignal, das ein Auslösen eines an der Einspeisung angeordneten Leistungsschalters verzögert oder blockiert. Die Erfindung betrifft auch ein entsprechendes Einspeisungsschutzgerät, mit dem ein solches Verfahren durchgeführt werden kann.

Ein Schutzgerät, bei dem ein Verfahren der genannten Art durchgeführt wird, wird von der Siemens AG beispielsweise unter dem Namen "Digitaler Überstromzeitschutz SIPROTEC 7SJ600" hergestellt und vertrieben.

Sammelschienen in elektrischen Energieversorgungsnetzen dienen zur Verteilung der elektrischen Energie auf zwei oder mehrere Abzweige. Hierbei wird die Sammelschiene selbst durch zumindest eine Einspeisung mit elektrischer Energie versorgt. Im Betrieb des elektrischen Energieversorgungsnetzes muss die Sammelschiene auf möglicherweise auftretende Kurzschlüsse überwacht werden. Solche Kurzschlüsse können auf der Sammelschiene vor den Abzweigen oder auf einem der Abzweig auftreten. Zur Überwachung sind an der Einspeisung und an jedem Abzweig üblicherweise elektrische Schutzgeräte vorgesehen, die anhand elektrischer Messgrößen (z.B. Strom- und/oder Spannungsmessgrößen) eine Entscheidung treffen, ob ein Kurzschluss vorliegt oder nicht. Liegt ein Kurzschluss vor, so muss dieser durch Öffnen geeigneter Leistungsschalter, die üblicherweise an der Einspeisung und jedem der Abzweige angeordnet sind, geklärt, also abgeschaltet, werden. Während die Abzweigschutzgeräte nur diejenigen Kurzschlüsse erfassen können, die in ihrem jeweiligen Abzweig aufgetreten sind, kann das Einspeisungsschutzgerät Kurzschlüsse auf der kompletten Sammelschiene, also vor und auf den einzelnen Abzweigen erkennen, diese allerdings in der Regel nicht voneinander unterscheiden.

Um im Falle eines Kurzschlusses in einem Abzweig der Sammelschiene möglichst gezielt nur den vom Fehler betroffenen Abzweig - und nicht die komplette Sammelschiene mit allen Abzweigen - abzuschalten, gibt üblicherweise ein Abzweigschutzgerät, das in seinem Abzweig einen Kurzschluss entdeckt hat, ein sogenanntes "Blockiersignal" an das Einspeisungsschutzgerät ab, um dieses am Auslösen eines der Einspeisung der Sammelschiene zugeordneten Leistungsschalters zu hindern. Hierdurch kann sichergestellt werden, dass der Kurzschluss an dem Abzweig gezielt durch das diesem Abzweig zugeordnete Abzweigschutzgerät und nicht durch das übergeordnete Einspeisungsschutzgerät abgeschaltet wird.

Auf der Sammelschiene vor den Abzweigen auftretende Kurzschlüsse werden von dem Einspeisungsschutzgerät erkannt und abgeschaltet. Zusätzlich dient das Einspeisungsschutzgerät den Abzweigschutzgeräten als Reserveschutzgerät für den Fall, dass aufgrund einer Fehlfunktion entweder eines Abzweigschutzgerätes oder eines dem fehlerbehafteten Abzweig zugeordneten Leistungsschalters eine Abschaltung des Kurzschlusses im Abzweig nicht erfolgt. Hierzu kann das Einspeisungsschutzgerät unabhängig von einem möglicherweise anstehenden Blockiersignal solche Kurzschlüsse abschalten, die über eine längere Zeit anstehen.

Zur Übertragung der Blockiersignale von einem jeweiligen Abzweigschutzgerät zum Einspeisungsschutzgerät wird bisher üblicherweise eine sogenannte "Festverdrahtung" vorgesehen, das heißt eine Kommunikationsverbindung, bei der ein Signalausgang eines jeden Abzweigschutzgerätes über eine separate elektrische Leitung direkt mit einem entsprechenden Signaleingang des Einspeisungsschutzgerätes verbunden ist. Obwohl sich bei dieser Konfiguration eine Überwachung der einzelnen Leitungen auf ihre Funktionstüchtigkeit (z.B. mittels einer Drahtbrucherkennung) vergleichsweise einfach durchführen lässt und aufgetretene Fehler leicht einer bestimmten Leitung zugeordnet werden können, bedeutet die Festverdrahtung insbesondere bei Sammelschienen mit vielen Abzweigen einen sehr hohen Installationsaufwand und daher hohe Kosten.

Aus der Druckschrift "Effiziente Energie-Automatisierung mit dem Standard IEC 61850, Anwendungsbeispiele" der Siemens AG, Bestell-Nummer E50001-K4455-A101-A1, 2007, ist ein Sammelschienenschutzsystem bekannt, bei dem zur Kommunikation anstelle einer Festverdrahtung ein Bussystem nach dem Standard IEC 61850 eingesetzt wird.

Aufgabe der vorliegenden Erfindung ist es, ein Verfahren der oben genannten Art bzw. ein entsprechendes Schutzgerät anzugeben, dass bei vergleichbarer Sicherheit gegen Kommunikationsausfälle einen geringeren Installationsaufwand und damit niedrigere Kosten ermöglicht.

Zur Lösung dieser Aufgabe wird gemäss Anspruch 1, ein Verfahren der eingangs genannten Art vorgeschlagen, bei dem die Abzweigschutzgeräte über einen Datenübertragungsbus wiederholt Kommunikationstelegramme an das Einspeisungsschutzgerät senden, das Einspeisungsschutzgerät den Empfang der Kommunikationstelegramme prüft, das Einspeisungsschutzgerät ein solches Abzweigschutzgerät, als fehlerhaft einstuft, von dem während einer festgelegten Zeitdauer keine Kommunikationstelegramme empfangen werden, wenn während derselben Zeitdauer von zumindest einem anderen Abzweigschutzgerät Kommunikationstelegramme empfangen worden sind, und bei zumindest einem als fehlerhaft eingestuften Abzweigschutzgerät das Einspeisungsschutzgerät die Ausführung eines Blockiersignals verhindert.

Der Erfindung liegt dabei zunächst der Gedanke zugrunde, die aufwändige Festverdrahtung zwischen den einzelnen Abzweigschutzgeräten und dem Einspeisungsschutzgerät durch einen Datenübertragungsbus zu ersetzen. Um auch bei einem solchen System eine vergleichbare Sicherheit gegen auf dem Datenübertragungsbus, dem Einspeisungsschutzgerät oder in den Abzweigschutzgeräten auftretende Fehler zu gewährleisten, ist vorgesehen, dass das Einspeisungsschutzgerät unter Anwendung einer Überwachungslogik den Empfang der einzelnen Kommunikationstelegramme der jeweiligen Abzweigschutzgeräte überwacht. Entsprechend dem Ergebnis einer solchen Überwachung wird eine Entscheidung bezüglich der Ausführung von empfangenen Blockiersignalen getroffen. Sollte nämlich am Ausbleiben von Kommunikationstelegrammen eines einzelnen Abzweigschutzgerätes ein Defekt dieses Abzweigschutzgerätes erkannt werden, so darf das Einspeisungsschutzgerät auch bei einem Blockiersignal eines der anderen Abzweigschutzgeräte nicht blockiert werden, da sichergestellt werden muss, dass bei einem Kurzschluss in dem Abzweig mit dem defekten Schutzgerät eine Abschaltung des Kurzschlusses erfolgen kann. Aufgrund des Defekts in dem betreffenden Abzweigschutzgerät kann diese Abschaltung jedoch nur noch durch das Einspeisungsschutzgerät vorgenommen werden.

Bei dem erfindungsgemäßen Verfahren wird folglich einerseits die teure und aufwändige Festverdrahtung durch einen einfacher zu installierenden und zu betreibenden Datenübertragungsbus ersetzt, andererseits wird die Sicherheit gegen Defekte und Kommunikationsausfälle in diesem Fall durch eine vergleichsweise einfache Überwachung der über den Datenübertragungsbus gesendeten Kommunikationstelegramme gewährleistet.

Eine vorteilhafte Ausführungsform des erfindungsgemäßen Verfahrens sieht vor, dass im Falle eines Kurzschlusses das Einspeisungsschutzgerät bei zumindest einem als fehlerhaft eingestuften Abzweigschutzgerät den der Einspeisung zugeordneten Leistungsschalter nur dann auslöst, wenn nach Ablauf einer vorgegebenen Verzögerungszeit der Kurzschluss immer noch vorliegt. Hierdurch wird dem Abzweigschutzgerät des fehlerbehafteten Abzweigs sozusagen eine erste Chance gegeben, den auf dem Abzweig liegenden Kurzschluss abzuschalten, bevor über das Einspeisungsschutzgerät die komplette Sammelschiene stromlos geschaltet wird.

Hierdurch soll unter anderem der Fall berücksichtigt werden, dass sich der Defekt des als fehlerhaft eingestuften Abzweigschutzgerätes nicht auf dessen Schutzfunktion als solche, sondern sich beispielsweise auf die Kommunikationseinrichtung beschränkt, über die die Kommunikationstelegramme an den Datenübertragungsbus ausgegeben werden.

Eine weitere vorteilhafte Ausführungsform des erfindungsgemäßen Verfahrens sieht zudem vor, dass das Einspeisungsschutzgerät seine Kommunikationsverbindung mit den Abzweigschutzgeräten als fehlerhaft einstuft, wenn während einer festgelegten Zeitdauer kein Kommunikationstelegramm empfangen wird. Hierdurch wird in vorteilhafter Weise erreicht, dass für den Fall, dass überhaupt kein Kommunikationstelegramm mehr von dem Einspeisungsschutzgerät empfangen wird, dieses nicht sämtliche Abzweigschutzgeräte als defekt einstuft, sondern davon ausgeht, dass seine eigene Kommunikationsverbindung mit den Abzweigschutzgeräten einen Fehler aufweist.

In diesem Zusammenhang wird es als vorteilhaft angesehen, wenn bei einer als fehlerhaft eingestuften Kommunikationsverbindung das Einspeisungsschutzgerät ein Auslösen des der Einspeisung zugeordneten Leistungsschalters blockiert. Da in diesem Fall nämlich das Einspeisungsschutzgerät-nicht mehr in der Lage ist, Blockiersignale von den Abzweigschutzgeräten zu empfangen, soll zunächst davon ausgegangen werden, dass die Abzweigschutzgeräte ordnungsgemäß funktionieren, so dass diese für die Abschaltung der in den Abzweigen aufgetretenen Kurzschlüsse verantwortlich sind.

Um dennoch einen auf der Sammelschiene vor den Abzweigen vorliegenden Kurzschluss sicher abschalten zu können oder einen Defekt eines Abzweigschutzgerätes durch das Einspeisungsschutzgerät ausgleichen zu können, wird in diesem Zusammenhang zudem vorgeschlagen, dass im Falle eines Kurzschlusses das Einspeisungsschutzgerät bei einer als fehlerhaft eingestuften Kommunikationsverbindung den der Einspeisung zugeordneten Leistungsschalter auslöst, wenn der Kurzschluss nach Ablauf einer vorgegebenen Wartezeit immer noch vorliegt.

Eine weitere vorteilhafte Ausführungsform des erfindungsgemäßen Verfahrens ist dadurch gegeben, dass die Kommunikationstelegramme in regelmäßigen Abständen gesendet werden. Durch die regelmäßige Übertragung von Kommunikationstelegrammen über den Datenübertragungsbus lässt sich besonders einfach erkennen, ob der Empfang von erwarteten Kommunikationstelegrammen eines, einiger oder aller Abzweigschutzgeräte ausbleibt.

Gemäß einer weiteren vorteilhaften Ausführungsform des erfindungsgemäßen Verfahrens kann vorgesehen sein, dass die Kommunikationstelegramme als Multicast-Nachrichten über den Datenübertragungsbus gesendet werden. Multicast-Nachrichten werden von einem Absender an alle in einer Empfängerliste eines Kommunikationssystems eingetragenen Empfänger gesendet. Es ist also keine gezielte Adressierung eines Kommunikationstelegramms an das Einspeisungsschutzgerät notwendig, so dass eine einfache und effiziente Verteilung der Kommunikationstelegramme an einen größeren Empfängerkreis möglich ist.

Eine weitere vorteilhafte Ausführungsform des erfindungsgemäßen Verfahrens sieht zudem vor, dass die Kommunikationstelegramme Informationen über den Status des jeweiligen Abzweigschutzgerätes enthalten. In diesem Fall können das Einspeisungsschutzgerät, die anderen Abzweigschutzgeräte und gegebenenfalls weitere Kommunikationsteilnehmer des Datenübertragungsbusses (z.B. Leitgeräte) sehr einfach über den jeweiligen Status des einzelnen Abzweigschutzgerätes informiert werden. Eine Statusinformation kann beispielsweise unter anderen eine Mitteilung über den Betriebszustand einzelner Komponenten des Abzweigschutzgerätes oder über einen Zustand des dem Abzweig zugeordneten Leistungsschalters sowie Messwerte oder Meldungen über Schwellenwertverletzungen enthalten.

Eine weitere vorteilhafte Ausführungsform des erfindungsgemäßen Verfahrens sieht außerdem vor, dass die Kommunikationstelegramme eines Abzweigschutzgerätes ein Blockiersignal umfassen, wenn das betreffende Abzweigschutzgerät einen Kurzschluss dem ihm zugeordneten Abzweig erkannt hat. Auf diese Weise kann das Blockiersignal besonders effizient übertragen werden, da es in die ohnehin zu sendenden Kommunikationstelegramme integriert wird. In einem Solchen Fall ist es von Vorteil, wenn bei einer Statusänderung, z.B. bei einem erkannten Kurzschluss, ein das Blockiersignal umfassendes Kommunikationstelegramm spontan, d.h. außerhalb eines ggf. vorhandenen regelmäßigen Taktes, gesendet wird.

Konkret können als Kommunikationstelegramme sogenannte "GOOSE-Datentelegramme" verwendet werden. Diese gemäß dem Standard IEC 61850 der International Electrotechnical Commission spezifizierten GOOSE-Datentelegramme (GOOSE - Generic Object oriented Substation Events) werden in entsprechenden Ethernet-Kommunikationsnetzwerken in Schaltanlagen eingesetzt, um besonders schnell und effizient Zustandsmeldungen direkt zwischen einzelnen Geräten der Schaltanlage auszutauschen.

Die oben genannte Aufgabe wird auch durch ein Einspeisungsschutzgerät gemäss Anspruch 11 zum Überwachen einer Sammelschiene eines elektrischen Energieversorgungsnetzes gelöst, das eine Kommunikationseinrichtung und eine Datenverarbeitungseinrichtung umfasst, wobei die Kommunikationseinrichtung zum Empfang von über einen Datenübertragungsbus gesendeten Kommunikationstelegrammen zumindest zweier Abzweigschutzgeräte eingerichtet ist und die Datenverarbeitungseinrichtung zur Auswertung des Empfangs der Kommunikationstelegramme derart eingerichtet ist, dass bei Ausbleiben des Empfangs von Kommunikationstelegrammen lediglich eines oder einiger der Abzweigschutzgeräte, ein Blockieren einer Auslösung eines Leistungsschalters durch ein über die Kommunikationseinrichtung empfangenes Blockiersignal verhindert wird.

Gemäß einer weiteren vorteilhaften Ausführungsform des erfindungsgemäßen Einspeisungsschutzgerätes ist vorgesehen, dass die Datenverarbeitungseinrichtung ferner zur Auswertung des Empfangs der Kommunikationstelegramme derart eingerichtet ist, dass beim Ausbleiben des Empfangs von Kommunikationstelegrammen aller Abzweigschutzgeräte eine Auslösung eines Leistungsschalters blockiert wird.

Die Erfindung soll im Folgenden anhand von Ausführungsbeispielen näher erläutert werden. Hierzu zeigen
- Figur 1: eine schematische Darstellung eines Schutzsystems zur Überwachung einer elektrischen Sammelschiene auf Kurzschlüsse,
- Figur 2: eine schematische Blockschaltbilddarstellung eines Ausführungsbeispiels eines Abzweigschutzgerätes,
- Figur 3: eine schematische Blockschaltbilddarstellung eines ersten Ausführungsbeispiels eines Einspeisungsschutzgerätes und
- Figur 4: eine schematische Blockschaltbilddarstellung eines zweiten Ausführungsbeispiels eines Einspeisungsschutzgerätes.

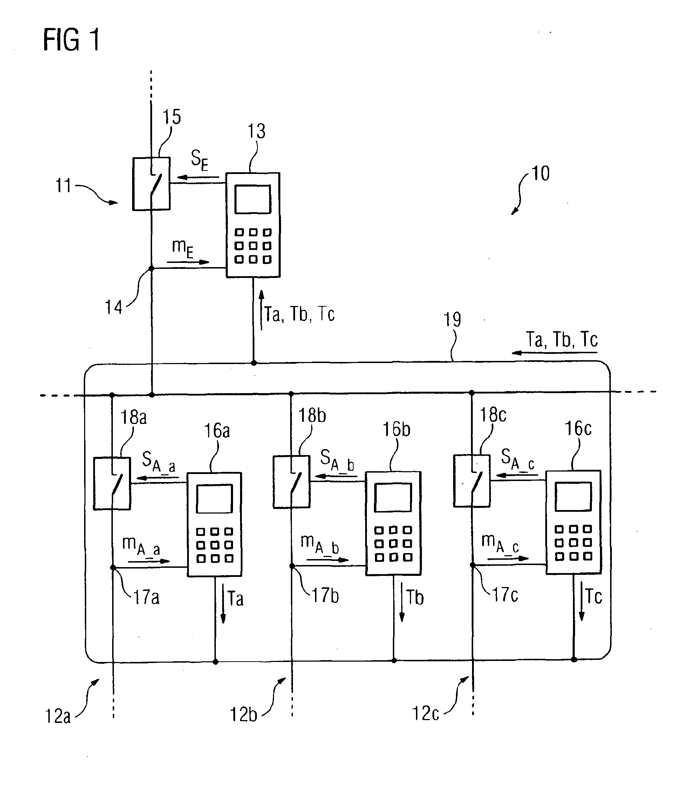

Figur 1 zeigt eine Sammelschiene 10, die eine Einspeisung 11 und Abzweige 12a, 12b und 12c umfasst. An der Einspeisung 11 nimmt ein Einspeisungsschutzgerät 13 über einen lediglich schematisch dargestellten Messwandler 14 Messwerte m_{E} auf, die dazu geeignet sind, den Zustand der Sammelschiene zu beschreiben und zu überprüfen, ob ein Kurzschluss auf der Sammelschiene vorliegt. Solche Messwerte können z.B. Strom- oder Spannungsmesswerte sein. Die Einspeisung 11 weist ferner einen Leistungsschalter 15 auf, der über ein Auslösesignal S_{E} des Einspeisungsschutzgerätes 13 zum Öffnen seiner Schaltkontakte veranlasst werden kann.

Die Abzweige 12a, 12b, 12c weisen jeweils Abzweigschutzgeräte 16a, 16b, 16c auf, die über lediglich schematisch dargestellte Messwandler 17a, 17b und 17c den Zustand des jeweiligen Abzweigs 12a, 12b, 12c beschreibende Messwerte m_{A_a}, m_{A_b}, m_{A_c} aufnehmen und anhand dieser Messwerte darüber entscheiden, ob auf dem jeweiligen Abzweig 12a, 12b, 12c ein Kurzschluss vorliegt. Erkennt ein solches Abzweigschutzgerät 16a, 16b, 16c auf seinem Abzweig 12a, 12b, 12c einen Kurzschluss, so gibt es ein jeweiliges Auslösesignal S_{A_a}, S_{A_b}, S_{A_c} an einen dem entsprechenden Abzweig 12a, 12b, 12c zugeordneten Leistungsschalter 18a, 18b, 18c, um diesen zum Öffnen seiner Schaltkontakte zu veranlassen und damit den von dem Kurzschluss betroffenen Abzweig 12a, 12b, 12c abzuschalten.

Das Einspeisungsschutzgerät 13 und die Abzweigschutzgeräte 16a, 16b, 16c sind über einen Datenübertragungsbus 19, der in Figur 1 lediglich beispielhaft in einer Ringstruktur dargestellt ist, verbunden und können über diesen Kommunikationstelegramme austauschen. So senden die einzelnen Abzweigschutzgeräte 16a, 16b, 16c in wiederholter Weise Kommunikationstelegramme Tₐ, T_{b} und T_{c} über den Datenübertragungsbus 19, wobei die Kommunikationstelegramme Tₐ, T_{b} und T_{c} zumindest an das Einspeisungsschutzgerät 13 gerichtet sind. Das Einspeisungsschutzgerät 13 empfängt die Kommunikationstelegramme Tₐ, T_{b} und T_{c}.

Die Kommunikationstelegramme Tₐ, T_{b} und T_{c} können beispielsweise Zustandsinformationen der einzelnen Abzweigschutzgeräte 16a, 16b, 16c enthalten. Ferner können die Kommunikationstelegramme Tₐ, T_{b} und T_{c} auch Blockiersignale B umfassen. Alternativ können die Blockiersignale B auch separat übertragen werden. Bei den Kommunikationstelegrammen kann es sich beispielsweise um sogenannte "GOOSE-Datentelegramme" handeln, die im Standard IEC 61850 zur Kommunikation in Schaltanlagen spezifiziert sind. Die Kommunikationstelegramme können hierbei als Multicast-Nachrichten, d.h. gleichzeitig an mehrere Empfänger, versendet werden.

Tritt ein Kurzschluss auf der Sammelschiene 10 auf, sollte dieser möglichst vom denjenigen Schutzgerät abgeschaltet werden, dass dem Ort, an dem der Fehler aufgetreten ist, direkt zugeordnet ist. So müssen Kurzschlüsse, die auf der Sammelschiene vor den Abzweigen 12a, 12b, 12c auftreten, von dem Einspeisungsschutzgerät 13 mittels des Leistungsschalters 15 abgeschaltet werden. Da hierbei die komplette Sammelschiene stromlos geschaltet wird, sind alle von der Sammelschiene abgehenden Abzweige 12a, 12b, 12c von der Abschaltung betroffen. Kurzschlüsse, die auf den Abzweigen auftreten, sollten hingegen von dem jeweiligen, dem Abzweig zugeordneten Schutzgerät über den entsprechenden Leistungsschalter abgeschaltet werden. So sollte beispielsweise ein Kurzschluss auf dem Abzweig 12a von dem Abzweigschutzgerät 16a über den Leistungsschalter 18a abgeschaltet werden.

Das Einspeisungsschutzgerät 13 dient zudem als Reserveschutzgerät für den Fall, dass eines der Abzweigschutzgeräte 16a, 16b, 16c einen Kurzschluss auf seinem Abzweig 12a, 12b, 12c nicht erkennt oder wegen eines Defektes nicht abschalten kann.

Für den Fall, dass eines der Abzweigschutzgeräte 16a, 16b, 16c einen Kurzschluss auf seinem Abzweig 12a, 12b, 12c erkennt, sendet es über den Datenübertragungsbus 19 ein Blockiersignal B, das beispielsweise in einem Kommunikationstelegramm Tₐ, T_{b}, T_{c} enthalten sein kann. Dieses Blockiersignal B veranlasst das Einspeisungsschutzgerät 13 dazu, die Auslösung seines Leistungsschalters 15 zu blockieren, d. h. eine Abgabe des Auslösesignals S_{E} an den Leistungsschalter 15 zu unterbinden. Das betroffene Abzweigschutzgerät 16a, 16b, 16c schaltet gleichzeitig über seinen jeweiligen Leistungsschalter 18a, 18b, 18c den fehlerbehafteten Abzweig 12a, 12b, 12c ab und klärt damit den Kurzschluss. Sollte der Kurzschluss jedoch nicht rechtzeitig geklärt werden, beispielsweise weil das entsprechende Abzweigschutzgerät oder der Leistungsschalter defekt sind, so kann das Einspeisungsschutzgerät 13 als Reserveschutzgerät auch bei anstehendem Blockiersignal B seinen Leistungsschalter auslösen, sofern der Kurzschluss nach Ablauf einer bestimmten Zeitdauer noch ansteht.

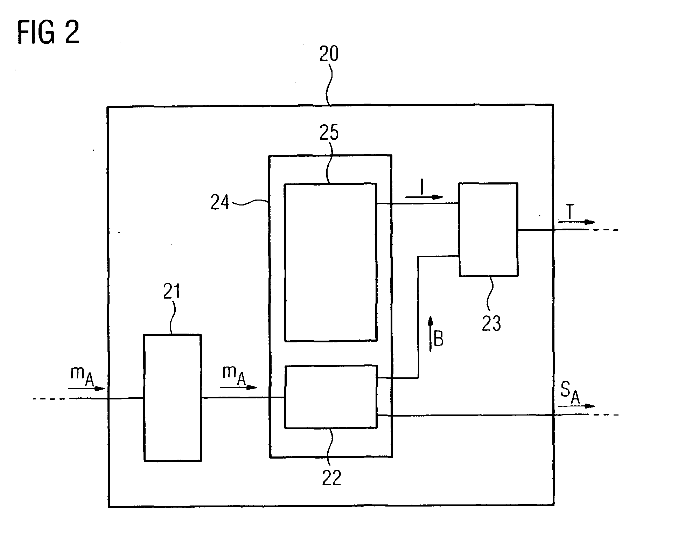

Bei dem in Figur 1 gezeigten Schutzsystem kommt einer funktionsfähigen Kommunikationsübertragung zwischen den Abzweigschutzgeräten 12a, 12b, 12c und dem Einspeisungsschutzgerät 13 ein hoher Stellenwert zu, da nur bei korrektem Empfang der Blockiersignale B die einwandfreie Funktionsfähigkeit des Schutzsystems gewährleistet ist. Daher ist vorgesehen, dass eine Datenverarbeitungseinrichtung des Einspeisungsschutzgerätes 13 eine Überwachungslogik zur Überwachung der korrekten Kommunikation auf dem Datenübertragungsbus 19 durchführt, die im Folgenden anhand der Figuren 2 bis 4 näher erläutert werden soll.

Figur 2 zeigt zunächst ein Ausführungsbeispiel eines Abzweigschutzgerätes 20. Das Abzweigschutzgerät 20 nimmt über eine Messwerterfassungseinrichtung 21 Messwerte m_{A} des entsprechenden Abzweiges auf und führt sie einer Datenverarbeitungseinrichtung 24 zu. Die Datenverarbeitungseinrichtung 24 umfasst eine Auswerteeinrichtung 22, die eine Auswertung der Messwerte m_{A} zur Prüfung hinsichtlich auf dem Abzweig vorliegender Kurzschlüsse vornimmt. Die Auswerteeinrichtung 22 führt hierzu sogenannte Schutzalgorithmen aus, bei denen es sich beispielsweise um einen Überstromzeitschutzalgorithmus oder einen Distanzschutzalgorithmus handeln kann. Solche Schutzalgorithmen sind dem mit der Überwachung von elektrischen Energieversorgungsnetzen betrauten Fachmann bekannt und werden daher an dieser Stelle nicht eingehender erläutert. Es ist lediglich festzuhalten, dass durch Anwendung des jeweiligen Schutzalgorithmus das Abzweigschutzgerät in die Lage versetzt wird, zu erkennen, ob auf dem von ihm überwachten Abzweig ein Kurzschluss vorliegt oder nicht.

Erkennt die Auswerteeinrichtung 22 des Abzweigschutzgerätes 20 einen Kurzschluss auf dem ihm zugeordneten Abzweig, so sendet sie ein Auslösesignal S_{A} an einen dem betroffenen Abzweig zugeordneten Leistungsschalter, um diesen zum Öffnen seiner Schaltkontakte zu veranlassen und damit den fehlerbehafteten Abzweig stromlos zu schalten. Gleichzeitig sendet sie ein Blockiersignal B an eine Kommunikationseinrichtung 23. Die Kommunikationseinrichtung 23 gibt das Blockiersignal B entweder für sich genommen oder als Teil eines Kommunikationstelegramms T an einen angeschlossenen Datenübertragungsbus ab. In der Beschreibung der Figuren 2 bis 4 soll lediglich beispielhaft angenommen werden, dass das Blockiersignal B als Bestandteil eines Kommunikationstelegramms T übertragen wird. Hierbei sollte die Übertragung eines Kommunikationstelegramms mit einem Blockiersignal B spontan erfolgen können, d.h. unabhängig von einem regelmäßigen Sendetakt der Kommunikationstelegramme unmittelbar nach der Erkennung eines Kurzschlusses.

Die Datenverarbeitungseinrichtung 24 des Abzweigschutzgerätes 20 kann ferner über eine erweiterte Auswertungseinrichtung 25 weitere Statusinformationen des Abzweigschutzgerätes 20 erfassen und diese als Informationssignäl I an die Kommunikationseinrichtung 23 abgeben. Die Kommunikationseinrichtung 23 integriert auch die Informationssignale I in die Kommunikationstelegramme T und gibt diese an den Datenübertragungsbus ab.

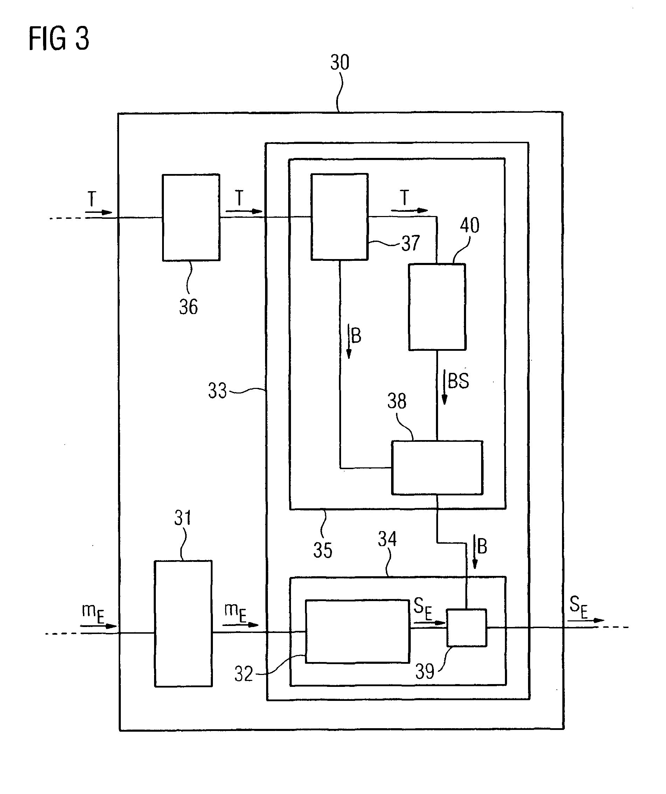

Figur 3 zeigt ein erstes Ausführungsbeispiel eines Einspeisungsschutzgerätes 30. Das Einspeisungsschutzgerät 30 nimmt über eine Messwerterfassungseinrichtung 31 Messwerte m_{E} an der Einspeisung auf und übergibt diese an eine Datenverarbeitungseinrichtung 33. Die Datenverarbeitungseinrichtung 33 umfasst eine Kurzschlussüberwachungseinheit 34 und eine Kommunikationsüberwachungseinheit 35 umfasst.

Ein wesentlicher Bestandteil der Kurzschlussüberwachungseinheit 34 ist eine Auswerteeinrichtung 32, die die Messwerte m_{E} unter Ausführung von entsprechenden Schutzalgorithmen, wie beispielsweise einem Überstromzeitschutzalgorithmus oder einem Distanzschutzalgorithmus, auswertet, um einen Kurzschluss auf der Sammelschiene zu erkennen. Dabei kann die Auswerteeinrichtung 32 zunächst nicht unterscheiden, ob es sich bei einem erkannten Kurzschluss um einen Kurzschluss auf der Sammelschiene vor den Abzweigen oder um einen Kurzschluss auf einem der Abzweige handelt. Erkennt die Auswerteeinrichtung 32 einen Kurzschluss, so gibt sie ausgangsseitig ein Auslösesignal S_{E} ab.

Über eine Kommunikationseinrichtung 36 empfängt das Einspeisungsschutzgerät 30 zudem Datentelegramme T und übermittelt diese an die Kommunikationsüberwachungseinheit 35 der Datenverarbeitungseinrichtung 33. Die Kommunikationsüberwachungseinheit 35 umfasst eine Analyseeinrichtung 37, die prüft, ob eines der von der Kommunikationseinrichtung 36 empfangenen Kommunikationstelegramme ein Blockiersignal B umfasst und sendet dieses gegebenenfalls an eine Blockiereinrichtung 38.

Empfängt die Blockiereinrichtung 38 ein Blockiersignal B, gibt sie es an eine Unterdrückungseinrichtung 39 ab, die ihrerseits bei anstehendem Blockiersignal B die Weiterleitung des Auslösesignals S_{E} unterdrückt. Auf diese Weise wird bei einem von einem Abzweigschutzgerät auf seinem Abzweig erkannten Kurzschluss gewährleistet, dass durch das Blockiersignal B das Einspeisungsschutzgerät an der Auslösung seines eigenen Leistungsschalters gehindert wird. Der Kurzschluss wird folglich von dem entsprechenden Abzweigschutzgerät abgeschaltet, ohne dass die komplette Sammelschiene stromlos geschaltet wird.

Die Kommunikationsüberwachungseinheit 35 umfasst ferner eine erste Prüfeinrichtung 40, die den Empfang der Kommunikationstelegramme T daraufhin überprüft, ob regelmäßig von jedem Abzweigschutzgerät die erwarteten Kommunikationstelegramme empfangen worden sind.

Erkennt die erste Prüfeinrichtung 40, dass von einem Abzweigschutzgerät die erwarteten Kommunikationstelegramme über eine vorgegebene Zeitdauer ausgeblieben sind, während von mindestens einem weiteren Abzweigschutzgerät die erwarteten Kommunikationstelegramme empfangen worden sind, so gibt sie ein Blockiersperrsignal BS an die Blockiereinrichtung 38 ab, das in der Blockiereinrichtung 38 die Weitergabe eines ggf. anstehenden Blockiersignals B verhindert. Hierdurch wird gewährleistet, dass für den Fall, dass eines der Abzweigschutzgeräte defekt ist und daher keine Kommunikationstelegramme mehr an das Einspeisungsschutzgerät senden kann, ein auf dem betroffenen Abzweig auftretender Kurzschluss auf jeden Fall von dem Einspeisungsschutzgerät abgeschaltet wird. Für den Fall, dass zumindest eines der Abzweigschutzgeräte als fehlerhaft erkannt worden ist, geht das Schutzsystem nämlich sozusagen in einen sicheren Modus über, in dem jeder Kurzschluss nur noch über das Einspeisungsschutzgerät abschaltet wird. Ein von einem anderen Abzweigschutzgerät gesendetes Blockiersignal darf daher keine Blockierwirkung mehr auf das Einspeisungsschutzgerät ausüben.

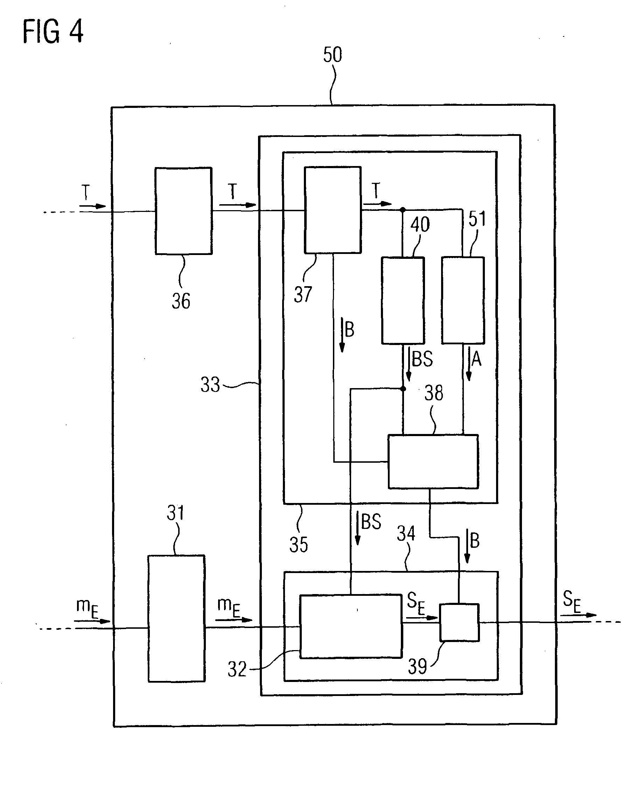

Figur 4 zeigt schließlich ein zweites Ausführungsbeispiel eines Einspeisungsschutzgerätes 50, das in großen Teilen mit dem Einspeisungsschutzgerät 30 gemäß dem ersten Ausführungsbeispiel nach Figur 3 übereinstimmt. Daher sind entsprechende Komponenten mit gleichen Bezugszeichen gekennzeichnet und werden bezüglich Figur 4 nicht nochmals im Detail erläutert. Im Folgenden werden nur noch diejenigen Funktionalitäten erläutert, die bei dem Einspeisungsschutzgerät 50 gemäß dem zweiten Ausführungsbeispiel nach Figur 4 hinzugekommen sind.

Bei dem Einspeisungsschutzgerät 50 wird das Blockiersperrsignal BS zusätzlich auch an die Auswerteeinrichtung 32 übermittelt und veranlasst diese, das Auslösesignal S_{E} erst nach Ablauf einer gewissen Verzögerungszeit abzugeben, falls nach Ablauf der Verzögerungszeit der Kurzschluss immer noch ansteht. Hierdurch soll gewährleistet werden, dass für den Fall, dass zwar aufgrund ausbleibender Kommunikationstelegramme T eines Abzweigschutzgerätes dieses als fehlerhaft erkannt worden ist, dieser Fehler sich allerdings nicht auf eine Schutzfunktion des Abzweigschutzgerätes bezieht, sondern sich auf dessen Kommunikationseinrichtung beschränkt. In diesem Fall ist das Schutzgerät durchaus zur Klärung des Kurzschlusses auf seinem Abzweig in der Lage, so dass durch Abwarten der Verzögerungszeit durch das Einspeisungsschutzgerät dem betreffenden Abzweigschutzgerät die Möglichkeit gegeben wird, den Kurzschluss selbst zu klären. Hierdurch kann vermieden werden, die komplette Sammelschiene stromlos zu schalten.

Ferner weist das Einspeisungsschutzgerät 50 gemäß Figur 4 eine weitere Prüfeinrichtung 51 auf, die überprüft, ob überhaupt keine Kommunikationstelegramme T mehr von der Kommunikationseinrichtung 36 des Einspeisungsschutzgerätes 50 empfangen werden. In einem solchen Fall ist nämlich davon auszugehen, dass die Kommunikationsverbindung des Einspeisungsschutzgerätes selbst, beispielsweise durch einen defekten Kommunikations-Switch im Datenübertragungsbus, gestört ist und eine Übertragung der Kommunikationstelegramme T aller Abzweigschutzgeräte an das Einspeisungsschutzgerät verhindert wird. In einem solchen Fall gibt die Prüfeinrichtung 51 ein Aktivierungssignal A an die Blockiereinrichtung 38 ab, die diese veranlasst, unabhängig vom Anstehen eines Blockiersignals B ein solches Blockiersignal B an die Unterdrückungseinrichtung 39 abzugeben. Damit soll ein Auslösen des Leistungsschalters an der Einspeisung verhindert werden, da bei einer solchen gestörten Kommunikationsverbindung den Abzweigschutzgeräten - von denen zunächst eine einwandfreie Funktionsweise angenommen wird - die Gelegenheit gegeben werden soll, einen Kurzschluss auf einem der Abzweige selbst zu klären.

Zur Erhöhung des Sicherheit des Schutzes kann die Prüfeinrichtung 51 das Aktivierungssignal A optional auch lediglich bis zum Ablauf einer bestimmten Wartezeit abgeben und danach die Abgabe des Aktivierungssignals A beenden, damit für den Fall, dass der Kurzschluss auch nach Ablauf der Wartezeit noch von der Auswertungseinrichtung 32 erkannt wird, das Auslösesignal SE an den Leistungsschalter der Einspeisung abgegeben werden kann. Hierdurch soll einerseits eine sichere Auslösung des Leistungsschalters an der Einspeisung für den Fall ermöglicht werden, dass eines der Abzweigschutzgeräte defekt ist oder seine Abschaltung nicht erfolgreich durchführen konnte. Andererseits wird so gewährleistet, dass ein Kurzschluss, der nicht auf einem der Abzweige, sondern auf der Sammelschiene vor den Abzweigen aufgetreten ist, abgeschaltet werden kann.

Sollte eine der Prüfeinrichtungen 40 oder 51 eine Kommunikationsstörung festgestellt haben, so sollte hierdurch die Abgabe einer Warnmitteilung ausgelöst werden, die entweder direkt an dem Einspeisungsschutzgerät angezeigt wird oder an ein dem Einspeisungsschutzgerät übergeordnetes Überwachungsgerät, wie beispielsweise an eine Netzleitstelle übermittelt wird, um dem Betreiber des elektrischen Energieversorgungsnetzes über einen aufgetretenen Fehler in der Kommunikationsfunktionalität des Schutzsystems aufzuklären.

Obwohl die Ausführungsbeispiele in den Figuren 2 bis 4 beschriebenen anhand von Blockschaltbildern erläutert worden sind, werden die entsprechenden Funktionen in den Schutzgeräten üblicherweise mit einer Software realisiert sein, die in einer Datenverarbeitungseinrichtung eines entsprechenden Schutzgerätes ausgeführt wird. Die Erläuterung anhand von Funktionsblöcken soll daher lediglich dem Verständnis, jedoch nicht zur Einschränkung der Erfindung dienen.

## Patentansprüche

1. Verfahren zum Überwachen einer Sammelschiene (10) eines elektrischen Energieversorgungsnetzes hinsichtlich auftretender Kurzschlüsse, wobei
- die Sammelschiene (10) eine Einspeisung (11) und zumindest zwei Abzweige (12a, 12b, 12c) aufweist,
- an jedem Abzweig (12a, 12b, 12c) ein Abzweigschutzgerät (16a, 16b, 16c) vorgesehen ist, das den jeweiligen Abzweig (12a, 12b, 12c) auf Kurzschlüsse überwacht, und
- an der Einspeisung (11) ein Einspeisungsschutzgerät (13) vorgesehen ist, das die Sammelschiene (10) auf Kurzschlüsse überwacht, und wobei
- bei einem Kurzschluss in einem der Abzweige (z.B. 12a) das diesem Abzweig (z.B. 12a) zugeordnete Abzweigschutzgerät (z.B. 16a) an das Einspeisungsschutzgerät (13) ein Blockiersignal abgibt, das ein Auslösen eines an der Einspeisung (11) angeordneten Leistungsschalters (15) verzögert oder blockiert,
- die Abzweigschutzgeräte (16a, 16b, 16c) über einen Datenübertragungsbus (19) wiederholt Kommunikationstelegramme (Tₐ, T_{b}, T_{c}) an das Einspeisungsschutzgerät (13) senden,
- das Einspeisungsschutzgerät (13) den Empfang der Kommunikationstelegramme (Tₐ, T_{b}, T_{c}) prüft, **dadurch gekennzeichnet, dass**
- das Einspeisungsschutzgerät (13) ein solches Abzweigschutzgerät (z.B. 16a), als fehlerhaft einstuft, von dem während einer festgelegten Zeitdauer keine Kommunikationstelegramme (z.B. Tₐ) empfangen werden, wenn während derselben Zeitdauer von zumindest einem anderen Abzweigschutzgerät (z.B. 16b, 16c) Kommunikationstelegramme (z.B. T_{b}, T_{c}) empfangen worden sind, und
- bei zumindest einem als fehlerhaft eingestuften Abzweigschutzgerät (z.B. 16a) das Einspeisungsschutzgerät (13) die Ausführung eines Blockiersignals (B) verhindert.

2. Verfahren nach Anspruch 1,
**dadurch gekennzeichnet,** dass
- im Falle eines Kurzschlusses das Einspeisungsschutzgerät (13) bei zumindest einem als fehlerhaft eingestuften Abzweigschutzgerät (z.B. 16a) den der Einspeisung (11) zugeordneten Leistungsschalter (15) nur dann auslöst, wenn nach Ablauf einer vorgegebenen Verzögerungszeit der Kurzschluss immer noch vorliegt.

3. Verfahren nach Anspruch 1 oder 2,
**dadurch gekennzeichnet,** dass
- das Einspeisungsschutzgerät (13) seine Kommunikationsverbindung mit den Abzweigschutzgeräten (16a, 16b, 16c) als fehlerhaft einstuft, wenn während einer festgelegten Zeitdauer kein Kommunikationstelegramm (Tₐ, T_{b}, T_{c}) empfangen wird.

4. Verfahren nach Anspruch 3,
**dadurch gekennzeichnet,** dass
- bei einer als fehlerhaft eingestuften Kommunikationsverbindung das Einspeisungsschutzgerät (13) ein Auslösen des der Einspeisung (11) zugeordneten Leistungsschalters (15) blockiert.

5. Verfahren nach Anspruch 4,
**dadurch gekennzeichnet,** dass
- im Falle eines Kurzschlusses das Einspeisungsschutzgerät (13) bei einer als fehlerhaft eingestuften Kommunikationsverbindung den der Einspeisung (11) zugeordneten Leistungsschalter (15) auslöst, wenn der Kurzschluss nach Ablauf einer vorgegebenen Wartezeit immer noch vorliegt.

6. Verfahren nach einem der vorangehenden Ansprüche,
**dadurch gekennzeichnet,** dass
- die Kommunikationstelegramme (Tₐ, T_{b}, T_{c}) in regelmäßigen Zeitabständen gesendet werden.

7. Verfahren nach einem der vorangehenden Ansprüche,
**dadurch gekennzeichnet,** dass
- die Kommunikationstelegramme (Tₐ, T_{b}, T_{c}) als Multicast-Nachrichten über den Datenübertragungsbus (19) gesendet werden.

8. Verfahren nach einem der vorangehenden Ansprüche,
**dadurch gekennzeichnet,** dass
- die Kommunikationstelegramme (Tₐ, T_{b}, T_{c}) Informationen über den Status des jeweiligen Abzweigschutzgerätes (16a, 16b, 16c) enthalten.

9. Verfahren nach einem der vorangehenden Ansprüche,
**dadurch gekennzeichnet,** dass
- die Kommunikationstelegramme (Tₐ, T_{b}, T_{c}) eines Abzweigschutzgerätes (16a, 16b, 16c) ein Blockiersignal (B) umfassen, wenn das betreffende Abzweigschutzgerät (16a, 16b, 16c) einen Kurzschluss dem ihm zugeordneten Abzweig (12a, 12b, 12c) erkannt hat.

10. Verfahren nach einem der vorangehenden Ansprüche,
**dadurch gekennzeichnet,** dass
- als Kommunikationstelegramme (Tₐ, T_{b}, T_{c}) GOOSE-Datentelegramme verwendet werden.

11. Einspeisungsschutzgerät (13) zum Überwachen einer Sammelschiene (10) eines elektrischen Energieversorgungsnetzes hinsichtlich auftretender Kurzschlüsse, wobei das Einspeisungsschutzgerät (13) eine Kommunikationseinrichtung und eine Datenverarbeitungseinrichtung umfasst,
- die Kommunikationseinrichtung zum Empfang von über einen Datenübertragungsbus (19) gesendeten Kommunikationstelegrammen (Tₐ, T_{b}, T_{c}) zumindest zweier Abzweigschutzgeräte (16a, 16b, 16c) eingerichtet ist, und **dadurch gekennzeichnet, dass**
- die Datenverarbeitungseinrichtung zur Auswertung des Empfangs der Kommunikationstelegramme (Tₐ, T_{b}, T_{c}) derart eingerichtet ist, dass bei Ausbleiben des Empfangs von Kommunikationstelegrammen (Tₐ, T_{b}, T_{c}) lediglich eines oder einiger der Abzweigschutzgeräte (z.B. 16a), ein Blockieren einer Auslösung eines Leistungsschalters (15) durch ein über die Kommunikationseinrichtung empfangenes Blockiersignal (B) verhindert wird.

12. Einspeisungsschutzgerät gemäß Anspruch 11,
**dadurch gekennzeichnet,** dass
- die Datenverarbeitungseinrichtung ferner zur Auswertung des Empfangs der Kommunikationstelegramme (Tₐ, T_{b}, T_{c}) derart eingerichtet ist, dass beim Ausbleiben des Empfangs von Kommunikationstelegrammen (Tₐ, T_{b}, T_{c}) aller Abzweigschutzgeräte (16a, 16b, 16c) eine Auslösung eines Leistungsschalters (15) blockiert wird.

## Claims

1. Method for monitoring a busbar (10) in an electrical power supply system for the occurrence of shorts, wherein
- the busbar (10) has a feeder (11) and at least two outgoers (12a, 12b, 12c),
- an outgoer protective device (16a, 16b, 16c) is provided on each outgoer (12a, 12b, 12c) and monitors the respective outgoer (12a, 12b, 12c) for shorts, and
- a feeder protective device (13) is provided on the feeder (11) and monitors the busbar (10) for shorts, and wherein
- in the event of a short in one of the outgoers (for example 12a), the outgoer protective device (for example 16a) associated with this outgoer (for example 12a) emits a blocking signal to the feeder protective device (13), which blocking signal delays or blocks tripping of a circuit breaker (15) which is arranged on the feeder (11),
- the outgoer protective devices (16a, 16b, 16c) repeatedly send communication messages (Tₐ, T_{b}, T_{c}) via a data transmission bus (19) to the feeder protective device (13),
- the feeder protective device (13) checks the reception of the communication messages (Tₐ, T_{b}, T_{c}), **characterized in that**
- the feeder protective device (13) classifies an outgoer protective device (for example 16a) such as this as being faulty from which no communication messages (for example Tₐ) are received within a defined time period, when communication messages (for example T_{b}, T_{c}) have been received from at least one other outgoer protective device (for example 16b, 16c) during the same time period, and
- if at least one outgoer protective device (for example 16a) is classified as faulty, prevents the feeder protective device (13) from implementing a blocking signal (B).

2. Method according to Claim 1, **characterized in that**
- in the event of a short, and when at least one outgoer protective device (for example 16a) has been classified as faulty, the feeder protective device (13) trips the circuit breaker (15) associated with the feeder (11) only if the short is still present after a predetermined delay time has elapsed.

3. Method according to Claim 1 or 2, **characterized in that**
- the feeder protective device (13) classifies its communication connection to the outgoer protective devices (16a, 16b, 16c) as faulty when no communication message (Tₐ, T_{b}, T_{c}) is received within a defined time period.

4. Method according to Claim 3, **characterized in that**
- when a communication connection is classified as faulty, the feeder protective device (13) blocks tripping of the circuit breaker (15) associated with the feeder (11).

5. Method according to Claim 4, **characterized in that**
- in the event of a short, and if a communication connection is classified as faulty, the feeder protective device (13) trips the circuit breaker (15) associated with the feeder (11) if the short is still present after a predetermined waiting time has elapsed.

6. Method according to one of the preceding claims, **characterized in that**
- the communication messages (Tₐ, T_{b}, T_{c}) are sent at regular time intervals.

7. Method according to one of the preceding claims, **characterized in that**
- the communication messages (Tₐ, T_{b}, T_{c}) are sent as multicast messages via the data transmission bus (19).

8. Method according to one of the preceding claims, **characterized in that**
- the communication messages (Tₐ, T_{b}, T_{c}) contain information relating to the status of the respective outgoer protective device (16a, 16b, 16c).

9. Method according to one of the preceding claims, **characterized in that**
- the communication messages (Tₐ, T_{b}, T_{c}) from an outgoer protective device (16a, 16b, 16c) comprise a blocking signal (B) when the relevant outgoer protective device (16a, 16b, 16c) has identified a short in the outgoer (12a, 12b, 12c) associated with it.

10. Method according to one of the preceding claims, **characterized in that**
- GOOSE data messages are used as communication messages (Tₐ, T_{b}, T_{c}).

11. Feeder protective device (13) for monitoring a busbar (10) in an electrical power supply system for the occurrence of shorts, wherein the feeder protective device (13) comprises a communication device and a data processing device,
- the communication device is designed to receive communication messages (Tₐ, T_{b}, T_{c}) which are sent via a data transmission bus (19), from at least two outgoer protective devices (16a, 16b, 16c), and **characterized in that**
- the data processing device is designed to evaluate the reception of the communication messages (Tₐ, T_{b}, T_{c}) such that, if no communication messages (Tₐ, T_{b}, T_{c}) are received from only one or from some of the outgoer protective devices (for example 16a), blocking of tripping of a circuit breaker (15) is prevented by means of a blocking signal (B) which is received via the communication device.

12. Feeder protective device according to Claim 11, **characterized in that**
- the data processing device is furthermore designed to evaluate reception of the communication messages (Tₐ, T_{b}, T_{c}) such that, when no communication messages (Tₐ, T_{b}, T_{c}) are received from any of the outgoer protective devices (16a, 16b, 16c), tripping of a circuit breaker (15) is blocked.

## Revendications

1. Procédé de contrôle d'une barre ( 10 ) omnibus d'un réseau d'alimentation en énergie électrique en ce qui concerne l'apparition de courts-circuits, dans lequel
- la barre ( 10 ) omnibus a une alimentation ( 11 ) et au moins deux dérivations ( 12a, 12b, 12c ),
- il est prévu, dans chaque dérivation ( 12a, 12b, 12c ), un appareil ( 16a, 16b, 16c ) de protection de dérivation, qui contrôle la dérivation ( 12a, 12b, 12c ) respective en ce qui concerne des courts-circuits, et
- il est prévu, sur l'alimentation ( 11 ), un appareil ( 13 ) de protection de l'alimentation, qui contrôle la barre ( 10 ) omnibus en ce qui concerne des courts-circuits, et dans lequel,
- s'il se produit un court-circuit dans l'une des dérivations ( par exemple 12a ), l'appareil ( par exemple 16a ) de protection de dérivation associé à cette dérivation ( par exemple 12a ) émet, vers l'appareil ( 13 ) de protection de l'alimentation, un signal de blocage, qui retarde ou qui bloque le déclenchement d'un disjoncteur ( 15 ) monté sur l'alimentation ( 11 ),
- les appareils ( 16a, 16b, 16c ) de protection de dérivation envoient, à l'appareil ( 13 ) de protection de l'alimentation, de manière répétée, des télégrammes ( Tₐ, T_{b}, T_{c} ) de communication par l'intermédiaire d'un bus ( 19 ) de transmission de données,
- l'appareil ( 13 ) de protection de l'alimentation contrôle la réception des télégrammes ( Tₐ, T_{b}, T_{c} ) de communication, **caractérisé en ce que**
- l'appareil ( 13 ) de protection de l'alimentation classe comme défectueux un appareil ( par exemple 16a ) de protection de dérivation, dont il n'a pas reçu de télégramme ( par exemple Tₐ ) de communication pendant un laps de temps fixé, si, pendant le même laps de temps, des télégrammes ( T_{b}, T_{c} ) de communication ont été reçus d'au moins un autre appareil ( par exemple 16b, 16c ) de protection de dérivation et,
- si au moins un appareil ( par exemple 16a ) de protection de dérivation est classé comme défectueux, l'appareil ( 13 ) de protection de l'alimentation empêche l'exécution d'un signal ( B ) de blocage.

2. Procédé suivant la revendication 1,
**caractérisé en ce que**
- dans le cas d'un court-circuit, l'appareil ( 13 ) de protection de l'alimentation ne déclenche, lorsqu'au moins un appareil ( par exemple 16a ) de protection de dérivation est classé comme défectueux, le disjoncteur ( 15 ) associé à l'alimentation ( 11 ) que si, après l'expiration d'un temps de retard donné à l'avance, le court-circuit est toujours présent.

3. Procédé suivant la revendication 1 ou 2,
**caractérisé en ce que**
- l'appareil ( 13 ) de protection de l'alimentation classe comme défectueuse sa liaison de communication avec les appareils ( 16a, 16b, 16b ) de protection de dérivation, si, pendant un laps de temps fixé, un télégramme ( Tₐ, T_{b}, T_{c} ) de communication n'est pas reçu.

4. Procédé suivant la revendication 3,
**caractérisé en ce que**,
- si une liaison de communication est classée comme défectueuse, l'appareil ( 13 ) de protection de l'alimentation bloque un déclenchement du disjoncteur ( 15 ) associé à l'alimentation ( 11 ).

5. Procédé suivant la revendication 4,
**caractérisé en ce que**
- dans le cas d'un court-circuit, l'appareil ( 13 ) de protection de l'alimentation déclenche, si une liaison de communication est classée comme défectueuse, le disjoncteur ( 15 ) associé à l'alimentation ( 11 ), si, après l'expiration d'un temps d'attente donné à l'avance, le court-circuit est toujours présent.

6. Procédé suivant l'une des revendications précédentes,
**caractérisé en ce que**
- les télégrammes ( Tₐ, T_{b}, T_{c} ) de communication sont envoyés à des intervalles de temps réguliers.

7. Procédé suivant l'une des revendications précédentes,
**caractérisé en ce que**
- les télégrammes ( Tₐ, T_{b}, T_{c} ) de communication sont envoyés sous la forme de messages multicast par l'intermédiaire du bus ( 19 ) de transmission de données.

8. Procédé suivant l'une des revendications précédentes,
**caractérisé en ce que**
- les télégrammes ( Tₐ, T_{b}, Tₑ ) de communication contiennent des informations sur le statut de l'appareil ( 16a, 16b, 16c ) de protection de dérivation respectif.

9. Procédé suivant l'une des revendications précédentes, **caractérisé en ce que**
- les télégrammes ( Tₐ, T_{b}, T_{c} ) de communication d'un appareil ( 16a, 16b, 16c ) de protection de dérivation comprennent un signal ( B ) de blocage si l'appareil ( 16a, 16b, 16c ) de protection de dérivation concerné a détecté un court-circuit dans la dérivation ( 12a, 12b, 12c ) qui lui est associée.

10. Procédé suivant l'une des revendications précédentes,
**caractérisé en ce que**
- on utilise, comme télégrammes ( Tₐ, T_{b}, T_{c} ) de communication, des télégrammes de données GOOSE.

11. Appareil ( 13 ) de protection de l'alimentation pour contrôler une barre ( 10 ) omnibus d'un réseau d'alimentation en énergie électrique en ce qui concerne l'apparition de courts-circuits, l'appareil ( 13 ) de protection de l'alimentation comprenant un dispositif de communication et un dispositif de traitement de données,
- le dispositif de communication est conçu pour la réception de télégrammes ( Tₐ, T_{b}, T_{c} ) de communication envoyés par l'intermédiaire d'un bus ( 16 ) de transmission de données d'au moins deux appareils ( 16a, 16b, 16c ) de protection de dérivation, et
**caractérisé en ce que**
- le dispositif de traitement de données est conçu pour exploiter la réception des télégrammes ( Tₐ, T_{b}, T_{c} ) de communication, de manière à, en absence de la réception de télégrammes ( Tₐ, T_{b}, T_{c} ) de communication de seulement l'un ou de certains des appareils ( 16a ) de protection de dérivation, empêcher un blocage d'un déclenchement d'un disjoncteur ( 15 ) par un signal ( B ) de blocage reçu par l'intermédiaire du dispositif de communication.

12. Appareil de protection de l'alimentation suivant la revendication 1,
**caractérisé en ce que**
- le dispositif de traitement de données est conçu, en outre, pour exploiter la réception des télégrammes ( Tₐ, T_{b}, T_{c} ) de communication en bloquant, en l'absence de la réception de télégrammes ( Tₐ, T_{b}, T_{c} ) de communication de tous les appareils ( 16a, 16b, 16c ) de dérivation, un déclenchement d'un disjoncteur ( 15 ).
